# EUROPEAN PATENT APPLICATION

(11) **EP 4 621 958 A2**
(43) Date of publication of application: **24.09.2025**
(21) Application number: 25194585.3
(22) Date of filing: 07.08.2025
(51) Int. Cl.: H01M 50/213, H01M 50/291, H01M 50/342, H01M 50/367, H01M 50/503, H01M 50/505

(54) **BATTERY PACK AND ENERGY STORAGE POWER SUPPLY**

(30) Priority: 09.09.2024 CN 202411260777; 09.09.2024 CN 202422210874 U; 05.06.2025 CN 202521145860 U
(71) Applicant: Shenzhen Hello Tech Energy Co., Ltd, Shenzhen, Guangdong 518109 (CN)
(72) Inventor: LI, Wenqun, Shenzhen, Guangdong 518109 (CN); ZHANG, Foming, Shenzhen, Guangdong 518109 (CN); AN, Xinxin, Shenzhen, Guangdong 518109 (CN); SHEN, Gaosong, Shenzhen, Guangdong 518109 (CN); SUN, Zhongwei, Shenzhen, Guangdong 518109 (CN)
(74) Representative: Dehns Germany Partnerschaft mbB

(57) **Abstract**

Provided are a battery pack and an energy storage power supply. The battery pack includes a battery cell and a housing assembly. The housing assembly includes a housing having a receiving chamber. The receiving chamber is provided with a first support at an inner wall of the receiving chamber. The first support is configured for mounting a battery cell provided with a first explosion-proof valve. The first support is provided with a supporting structure configured to support the battery cell and allow a spacing to be formed between the first explosion-proof valve and the inner wall of the receiving chamber to form a pressure relief space. The pressure relief space is in communication with the receiving chamber. A valve port of the first explosion-proof valve is oriented towards the pressure relief space.

## Description

This application claims priorities to and benefits of Chinese patent application Nos. 202411260777.1 and 202422210874.1, filed with China National Intellectual Property Administration on September 09, 2024, and Chinese patent application No. 202521145860.4 filed with China National Intellectual Property Administration on June 05, 2025.

### FIELD

The present disclosure relates to the field of energy storage power supply technologies, and more particularly, to a battery pack and an energy storage power supply.

### BACKGROUND

In the related art, in response to thermal runaway situations, an energy storage power supply takes measures such as adding thermal insulation materials to a battery module, which can prolong a spread duration of battery thermal runaway, reduce a maximum temperature of the battery in the module during thermal runaway, and prevent fires when the battery's safety valve erupts during thermal runaway. Alternatively, liquid cooling technology and endothermic phase change material technology are used in the design of battery modules to promptly remove the heat emitted by a battery cell when thermal runaway occurs. However, the above measures not only raise material costs and process difficulty, but also increase the volume and weight of the energy storage power supply.

### SUMMARY

Embodiments of the present disclosure provide a battery pack and an energy storage power supply to solve or improve a technical problem that when high-pressure fluid passes through the battery pack, the battery pack is prone to damage under pressure of the high-pressure fluid, reducing connection stability and a service life of a fluid battery pack.

A battery pack according to the embodiments of the present disclosure includes a battery cell and a housing assembly. The housing assembly includes a housing having a receiving chamber. The receiving chamber is provided with a first support at an inner wall of the receiving chamber. The first support is configured for mounting a battery cell provided with a first explosion-proof valve. The first support is provided with a supporting structure. The supporting structure is configured to support the battery cell and allow a spacing to be formed between the first explosion-proof valve and the inner wall of the receiving chamber to form a pressure relief space. The pressure relief space is in communication with the receiving chamber. A valve port of the first explosion-proof valve is oriented towards the pressure relief space.

In this way, by providing the supporting structure in the first support, the valve port of the first explosion-proof valve is oriented towards the pressure relief space formed by the supporting structure and the battery cell, in such a manner that when the battery cell is in a situation of thermal runaway, substances ejected from the first explosion-proof valve can enter the pressure relief space and flow out of the battery pack to an external environment, promptly reducing pressure in the battery cell without increasing material costs, process difficulty, as well as volume and weight of the energy storage power supply.

In some embodiments, the first support and the housing are integrally formed.

In this way, by integrally forming the first support and the housing, the battery cell can be fixed to the housing, realizing a module-free fixing structure. Therefore, the battery pack does not need to reserve space for module mounting, which reduces the volume of the energy storage power supply and improves volume energy density of the energy storage power supply, reducing product costs.

In some embodiments, the first support includes a fixing portion having a first fixing recess. The first fixing recess is configured to be engaged with an end of the battery cell. The supporting structure is disposed in the first fixing recess.

In this way, by defining the first fixing recess at the fixing portion of the first support, the end of the battery cell can be fixed to the first fixing recess, preventing the battery cell from moving. Also, the battery cell can be further fixed by abutting the supporting structure against the battery cell.

In some embodiments, the first fixing recess has an opening at a side wall of the first fixing recess. The pressure relief space is in communication with the receiving chamber through the opening.

In this way, by defining the opening at the side wall of the first fixing recess, the pressure relief space is in communication with the receiving chamber, in such a manner that the substances ejected from the battery cell can be guided out of the first fixing recess to achieve a purpose of pressure relief.

In some embodiments, a gap is formed between a side wall of the first fixing recess and a side wall of the battery cell. The pressure relief space is in communication with the receiving chamber through the gap.

In this way, by forming the gap between the side wall of the first fixing recess and the side wall of the battery cell, the substances ejected from the battery cell can flow into the receiving chamber through the gap to achieve the purpose of the pressure relief.

In some embodiments, the fixing portion has a plurality of first fixing recesses arranged in parallel. The supporting structure includes two protruding ribs that pass through the plurality of first fixing recesses and form a guide channel. The valve port of the first explosion-proof valve is oriented towards the guide channel and is in communication with the receiving chamber through the guide channel.

In this way, by arranging the plurality of first fixing recesses in parallel at the fixing portion, the plurality of battery cells can be fixed, improving a space utilization rate. By forming the guide channel in the supporting structure and enabling the valve port of the first explosion-proof valve to face towards the guide channel, the substances ejected from the battery cell can enter the receiving chamber through the guide channel to achieve the purpose of the pressure relief.

In some embodiments, the battery cell is a cylindrical battery cell. The first fixing recess is a circular recess. Each of the two protruding ribs includes an arc segment and a straight segment. Two adjacent arc segments are connected by the straight segment. The arc segment is disposed along a circumferential edge of the first fixing recess. The arc segment is at least partially in contact with a bottom wall of the cylindrical battery cell. The arc segment is located closer to a wall of the first fixing recess than a center of the first fixing recess.

In this way, by fixing the battery cell with the first fixing recess, a shape of the first fixing recess is adapted to a shape of the battery cell, which can stably fix the battery cell and improve the space utilization rate. A part of the protruding rib located in the first fixing recess is arranged around the center of the first fixing recess, and a part of the protruding rib in contact with the battery cell is arranged along the circumferential edge of the first fixing recess, in such a manner that the bottom wall of the battery cell is uniformly stressed. Therefore, large deformation of the bottom wall is avoided to a certain extent, making overall safety of the battery cell satisfactory.

In some embodiments, the first support includes a plurality of fixing posts arranged at intervals. The plurality of fixing posts form a first fixing recess configured to be engaged with an end of the battery cell. The supporting structure is disposed at each of the plurality of fixing posts.

In this way, by providing the plurality of fixing posts to enclose the first fixing recess, the end of the battery cell can be fixed to the first fixing recess, preventing the battery cell from moving. Also, the supporting structure is disposed at the fixing post, which allows for the formation of the pressure relief space while fixing the battery cell, guiding pressure relief of the battery cell.

In some embodiments, the spacing between the first explosion-proof valve and the inner wall of the receiving chamber is greater than or equal to 2 mm.

In this way, by setting the spacing between the first explosion-proof valve and the inner wall of the receiving chamber to be greater than or equal to 2 mm, the pressure relief space can be formed. The pressure relief space can allow the substances ejected from the battery cell to flow quickly into the receiving chamber, to achieve a purpose of rapid pressure relief.

In some embodiments, the first explosion-proof valve is arranged to avoid interference with the supporting structure.

In this way, the first explosion-proof valve can be prevented from being blocked by the supporting structure, avoiding an explosion caused by a failure of the battery cell's pressure relief.

In some embodiments, the supporting structure is a protrusion protruding from the inner wall of the receiving chamber.

In this way, by forming the supporting structure at the inner wall of the receiving chamber, the pressure relief space can be formed while supporting the battery cell, guiding the pressure relief of the battery cell.

In some embodiments, the battery pack includes a second support connected to the housing. The battery cell has an end connected to the first support and another end connected to the second support.

In this way, by connecting the second support to the housing, the other end of the battery cell is connected to the second support, in such a manner that the battery cell can be further fixed by the second support, enhancing the stability of the battery cell in the battery pack.

In some embodiments, the first support has a first fixing recess configured to be engaged with the end of the battery cell. The second support has a second fixing recess configured to be engaged with the other end of the battery cell. The battery cell includes a second explosion-proof valve. The first explosion-proof valve and the second explosion-proof valve are disposed at two opposite sides of the battery cell, respectively. The second support is arranged to avoid interference with the second explosion-proof valve.

In this way, by defining the second fixing recess at the second support, the other end of the battery cell can be fixed by the second fixing recess. By disposing the second explosion-proof valve at the battery cell and disposing the second explosion-proof valve and the first explosion-proof valve at two ends of the battery cell, respectively, the pressure relief of the battery cell can be accelerated. Also, by arranging the second support to avoid interference with the second explosion-proof valve, the second explosion-proof valve can be prevented from being blocked.

In some embodiments, the second fixing recess has a through hole at a bottom surface of the second fixing recess. The battery cell includes a positive electrode and a negative electrode. The positive electrode and the negative electrode of each of a plurality of battery cells are connected by a bus bar through the through hole. The bus bar is arranged to avoid interference with the second explosion-proof valve.

In this way, by setting the bus bar to connect the positive electrodes and the negative electrodes of the plurality of battery cells, the plurality of battery cells can be connected in series. Also, by arranging the bus bar to avoid interference with the second explosion-proof valve, the second explosion-proof valve can be prevented from being blocked.

An energy storage power supply according to the embodiments of the present disclosure includes an inverter and the battery pack according to any one of the above embodiments. The battery cell and the inverter are mounted in the housing assembly. The inverter is electrically connected to the battery cell.

In some embodiments, the energy storage power supply includes a fan located in the receiving chamber. The housing assembly includes a guide channel. The fan is configured to blow air to or exhaust air from the guide channel. A direction of airflow formed by the fan is the same as an extension direction of the guide channel.

In this way, by disposing the fan in the receiving chamber, the fan dissipates heat for the energy storage power supply.

In some embodiments, the energy storage power supply includes a ventilation structure through which the receiving chamber is in communication with an external environment.

In this way, by disposing the ventilation structure, the receiving chamber can be in communication with an external environment, in such a manner that substances ejected from the battery cell can be discharged from the receiving chamber to the external environment, to achieve a purpose of pressure relief.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural view of an energy storage power supply according to some embodiments of the present disclosure.
FIG. 2 is an exploded view of an energy storage power supply according to some embodiments of the present disclosure.
FIG. 3 is a schematic structural view of a housing assembly according to some embodiments of the present disclosure.
FIG. 4 is another schematic structural view of a housing assembly according to some embodiments of the present disclosure.
FIG. 5 is yet another schematic structural view of a housing assembly according to some embodiments of the present disclosure.
FIG. 6 is a schematic cross-sectional view of a housing assembly according to some embodiments of the present disclosure.
FIG. 7 is a schematic partial structural view of an energy storage power supply according to some embodiments of the present disclosure.
FIG. 8 is a schematic structural view of a first support according to some embodiments of the present disclosure.
FIG. 9 is a schematic cross-sectional view of an energy storage power supply according to some embodiments of the present disclosure.
FIG. 10 is yet still another schematic structural view of a housing assembly according to some embodiments of the present disclosure.
FIG. 11 is a schematic structural view of a housing and a second support according to some embodiments of the present disclosure.
FIG. 12 is a top view of a housing assembly according to some embodiments of the present disclosure.
FIG. 13 is another schematic cross-sectional view of a housing assembly according to some embodiments of the present disclosure.
FIG. 14 to FIG. 17 are each a schematic structural view of a battery cell according to some embodiments of the present disclosure.

Description of reference numerals in the accompanying drawings:

100, energy storage power supply; 10, housing assembly; 11, housing; 111, first support; 1111, fixing portion; 1112, first fixing recess; 11121, opening; 1113, pressure relief space; 1114, supporting structure; 11141, protruding rib; 11142, guide channel; 11143, fixing wall; 11144, arc segment; 11145, straight segment; 1115, fixing post; 1116, gap; 1117, pressure relief groove; 112, receiving chamber; 113, first connection post; 12, battery cell; 121, first explosion-proof valve; 122, second explosion-proof valve; 123, positive electrode; 124, negative electrode; 125, side wall; 126, bottom wall; 13, ventilation structure; 131, ventilation hole; 14, second support; 141, second fixing recess; 142, through hole; 143, second connection post; 144, fixing support post; 15, fixing base; 16, heat dissipation space; 17, bus bar; 20, inverter; 30, fan.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

Various embodiments or examples for implementing different structures of the present disclosure are provided below. In order to simplify the description of the embodiments of the present disclosure, components and arrangements of specific examples are described herein. These specific examples are merely for the purpose of illustration, rather than limiting the present disclosure. Further, the same reference numerals and/or reference letters may appear in different examples in the embodiments of the present disclosure for the purpose of simplicity and clarity, instead of indicating a relationship between different embodiments and/or the discussed arrangements. In addition, the embodiments of the present disclosure provide examples of various specific processes and materials. However, applications of other processes and/or the use of other materials are conceivable for those of ordinary skill in the art.

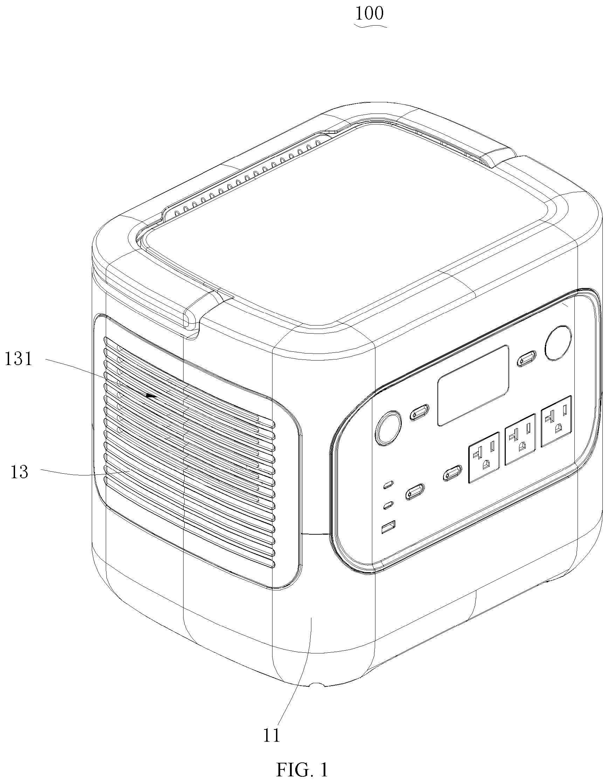

As illustrated in FIG. 1, FIG. 2, and FIG. 3, a battery pack according to the embodiments of the present disclosure includes a battery cell 12 and a housing assembly 10. The housing assembly 10 includes a housing 11 having a receiving chamber 112. The receiving chamber 112 is provided with a first support 111 at an inner wall of the receiving chamber 112. The first support 111 is configured for mounting a battery cell 12. The battery cell 12 is provided with a first explosion-proof valve 121. The first support 111 is provided with a supporting structure 1114. The supporting structure 1114 is configured to support the battery cell 12 and allow a spacing to be formed between the first explosion-proof valve 121 and the inner wall of the receiving chamber 112 to form a pressure relief space 1113. The pressure relief space 1113 is in communication with the receiving chamber 112. A valve port of the first explosion-proof valve 121 is oriented towards the pressure relief space 1113.

In this way, by providing the supporting structure 1114 in the first support 111, the valve port of the first explosion-proof valve 121 is oriented towards the pressure relief space 1113 formed by the supporting structure 1114 and the battery cell 12, in such a manner that when the battery cell 12 is in a situation of thermal runaway, substances ejected from the first explosion-proof valve 121 can enter the pressure relief space 1113 and flow out of the housing assembly 10 to an external environment, promptly reducing pressure in the battery cell 12 without increasing material costs, process difficulty, as well as volume and weight of the energy storage power supply 100.

The energy storage power supply 100 is a device capable of storing electric energy. It may be used as a mobile power supply, store a large amount of electric energy, and efficiently transmit the stored electric energy to other electrical devices. The energy storage power supply 100 includes the battery cell 12, a bus bar 17, an inverter 20, and the housing assembly 10. The battery cell 12 may supply the electric energy, and positive electrodes 123 and negative electrodes 124 of a plurality of battery cells 12 may be connected by the bus bar 17. The inverter 20 may be a converter capable of realizing mutual conversion between direct current electric energy and a fixed-frequency and fixed-voltage alternating current or a frequency-modulated and voltage-regulated alternating current. For example, the inverter 20 can convert the direct current electric energy (such as a battery and a storage battery) into an alternating current, or convert the alternating current into a direct current, or convert a low voltage into a high voltage, or convert the high voltage into the low voltage.

A battery pack (not shown in the drawings) includes the battery cell 12, the bus bar 17, and the housing assembly 10. The positive electrodes 123 and the negative electrodes 124 of the plurality of battery cells 12 may be connected by the bus bar 17, in such a manner that the battery pack can expand the electric energy capacity of the energy storage power supply 100 when the battery pack is connected to the energy storage power supply 100 through a power cord or by a plug-in connection manner.

In some embodiments, the housing assembly 10 includes the housing 11. The housing 11 includes a first housing and a second housing, and the first housing may be connected to the second housing. For example, the first housing may be connected to the second housing by screw bolts or by snaps. The housing 11 is cylindrical in shape, in such a manner that the housing 11 can form the receiving chamber 112, which may be configured to accommodate the battery cell 12 and other structures.

The first support 111 is disposed at the inner wall of the receiving chamber 112, that is, a bottom wall of the housing 11. The first support 111 may be configured for fixing the battery cell 12. The supporting structure 1114 is disposed at the first support 111. The supporting structure 1114 may be a protrusion protruding from the inner wall of the receiving chamber 112. For example, the supporting structure 1114 may be a plane or a rib protruding from the inner wall of the receiving chamber 112, which allows the supporting structure 1114 to support the battery cell 12, and allows an end of the battery cell 12 to be spaced apart from the inner wall of the receiving chamber 112, forming the pressure relief space 1113 between the battery cell 12 and the inner wall of the receiving chamber 112. The pressure relief space 1113 may be in communication with the receiving chamber 112, and the receiving chamber 112 is in communication with an external environment of the housing 11, in such a manner that the pressure relief space 1113 can be configured to drain substances entering the pressure relief space 1113 and lead them out of the energy storage power supply 100.

The battery cell 12 may be configured to store electric energy by converting electric energy into chemical energy for storage and output the electric energy by converting the chemical energy back into electric energy for release when needed. The battery cell 12 may be mounted at the first support 111, allowing the battery cell 12 to be fixed.

The first explosion-proof valve 121 is disposed at an end surface of the battery cell 12 close to the first support 111, and a spacing between the first explosion-proof valve 121 and the inner wall of the receiving chamber 112 is greater than or equal to 2 mm, in such a manner that the pressure relief space 1113 can be formed between the first explosion-proof valve 121 and the inner wall of the receiving chamber 112, and the pressure relief space 1113 can allow the substances ejected from the battery cell 12 to flow quickly into the receiving chamber 112, to achieve a purpose of rapid pressure relief.

The valve port of the first explosion-proof valve 121 may face towards the pressure relief space 1113, and the first explosion-proof valve 121 is arranged to avoid interference with the supporting structure 1114, in such a manner that the first explosion-proof valve 121 can be prevented from being blocked by the supporting structure 1114, and the substances ejected from the first explosion-proof valve 121 can flow into the pressure relief space 1113. The first explosion-proof valve 121 is internally provided with a weak position or a weak device. When pressure of the battery cell 12 rises, the weak position is ruptured by the pressure, releasing the pressure of the battery cell 12. Therefore, the battery cell 12 is prevented from exploding or catching fire due to abnormal conditions such as overcharging, over-discharging, and short circuit.

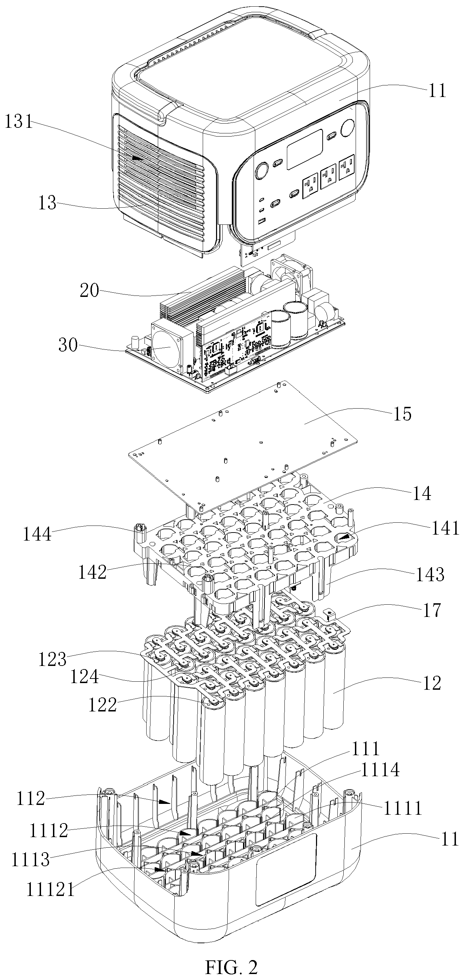

As illustrated in FIG. 2, in some embodiments, the first support 111 and the housing 11 are integrally formed.

In this way, by integrally forming the first support 111 and the housing 11, the battery cell 12 can be fixed to the housing 11, realizing a module-free fixing structure. Therefore, the housing assembly 10 does not need to reserve space for module mounting, which reduces the volume of the energy storage power supply 100 and improves energy density of the energy storage power supply 100, reducing volume, weight, and costs of the product.

In some embodiments, the first support 111 and the housing 11 may be manufactured using an integral molding process. For example, when the first support 111 and the housing 11 are processed using metallic materials, the first support 111 and the housing 11 may be manufactured by methods such as sand casting, pressure casting, or air pressure casting. That is, molten metal or alloy is injected into a pre-made mold, and after solidification and cooling, the first support 111 and the housing 11 are formed. When the first support 111 and the housing 11 are processed using plastic materials, molten plastic material is injected into a mold under high pressure, and after cooling and solidification, the first support 111 and the housing 11 with a desired shape and size are obtained.

Therefore, it is not necessary to assemble the battery cells 12 into a module and mount a plurality of modules into the housing assembly 10 to form a three-level assembly mode of "battery cell 12-module-housing assembly 10". Instead, the battery cell 12 is directly integrated into the housing assembly 10, which simplifies an assembly process, significantly simplifying a structure of the housing assembly 10 and improving a space utilization rate. In this way, energy density of the battery is improved and costs are reduced.

As illustrated in FIG. 2, in some embodiments, the first support 111 includes a fixing portion 1111. The fixing portion 1111 has a first fixing recess 1112 configured to be engaged with an end of the battery cell 12. The supporting structure 1114 is disposed in the first fixing recess 1112.

In this way, by defining the first fixing recess 1112 at the fixing portion 1111 of the first support 111, the end of the battery cell 12 can be fixed to the first fixing recess 1112, preventing the battery cell 12 from moving. Also, the battery cell 12 can be further fixed by abutting the supporting structure 1114 against the battery cell 12.

In some embodiments, the first support 111 includes the fixing portion 1111 protruding from the inner wall of the housing 11, and the first fixing recess 1112 is formed at the fixing portion 1111. A shape and a size of the first fixing recess 1112 are adapted to a shape and a size of the end surface of the battery cell 12. For example, when the battery cell 12 is a cylinder, the first fixing recess 1112 is circular in shape. When the battery cell 12 is a rectangular prism, the first fixing recess 1112 is rectangular in shape. Also, a position of the first fixing recess 1112 at the first support 111 corresponds to a position of the battery cell 12, in such a manner that the end of the battery cell 12 can be engaged with the first fixing recess 1112, enabling the fixing portion 1111 to fix the battery cell 12. The supporting structure 1114 may be disposed in the first fixing recess 1112, allowing the battery cell 12 extending into the first fixing recess 1112 to be supported by the supporting structure 1114, enabling the battery cell 12 to be further fixed.

The number of first fixing recesses 1112 is adapted to the number of battery cells 12. Therefore, the pressure relief space 1113 can be in communication with a row of a plurality of first fixing recesses 1112 arranged in an array, in such a manner that the substances ejected from the first explosion-proof valve 121 of the battery cell 12 can flow into the pressure relief space 1113.

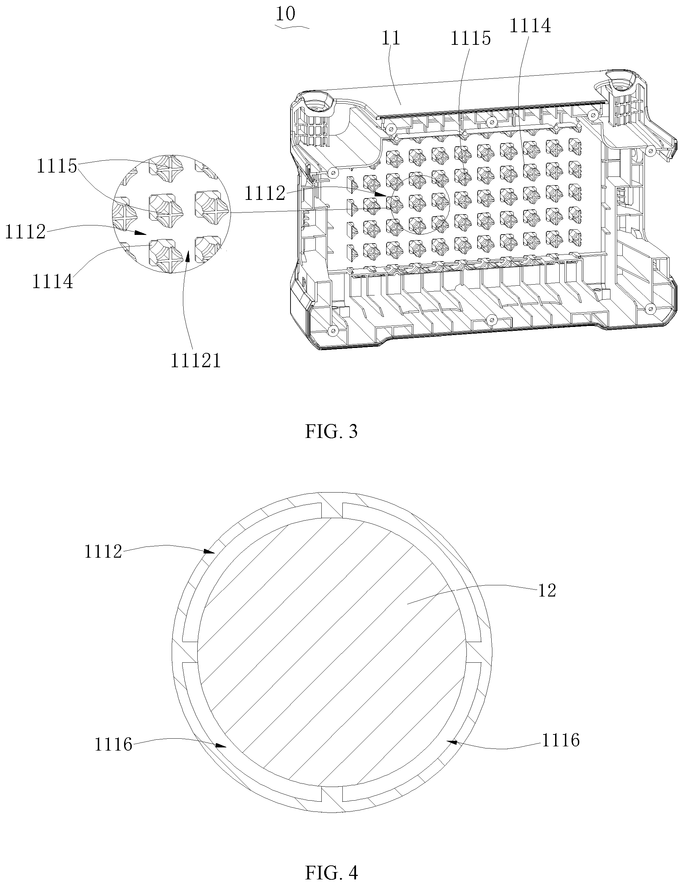

As illustrated in FIG. 2 and FIG. 3, in some embodiments, the first fixing recess 1112 has an opening 11121 at a side wall of the first fixing recess 1112. The pressure relief space 1113 is in communication with the receiving chamber 112 through the opening 11121.

In this way, by defining the opening 11121 at the side wall of the first fixing recess 1112, the pressure relief space 1113 is in communication with the receiving chamber 112, in such a manner that the substances ejected from the battery cell 12 can be guided out of the first fixing recess 1112 to achieve a purpose of pressure relief.

In some embodiments, the first fixing recess 1112 has the opening 11121 at the side wall of the first fixing recess 1112, and the pressure relief space 1113 may be in communication with the receiving chamber 112 through the opening 11121, in such a manner that the substances in the pressure relief space 1113 can enter the receiving chamber 112. A plurality of openings 11121 may be provided, for example, two or four openings 11121 may be provided, and the plurality of openings 11121 may be symmetrically defined at the side wall of the first fixing recess 1112.

As illustrated in FIG. 4, in some embodiments, a gap 1116 is formed between a side wall of the first fixing recess 1112 and a side wall of the battery cell 12, and the pressure relief space 1113 is in communication with the receiving chamber 112 through the gap 1116.

In this way, by forming the gap 1116 between the side wall of the first fixing recess 1112 and the side wall of the battery cell 12, the substances ejected from the battery cell 12 can flow into the receiving chamber 112 through the gap 1116 to achieve the purpose of the pressure relief.

In some embodiments, a diameter of the battery cell 12 may be adapted to a diameter of the first fixing recess 1112, in such a manner that the gap 1116 is formed between the side wall of the first fixing recess 1112 and the side wall of the battery cell 12. Also, the pressure relief space 1113 is in communication with the receiving chamber 112 through the gap 1116, in such a manner that the substances ejected from the battery cell 12 into the pressure relief space 1113 can flow into the receiving chamber 112 through the gap 1116.

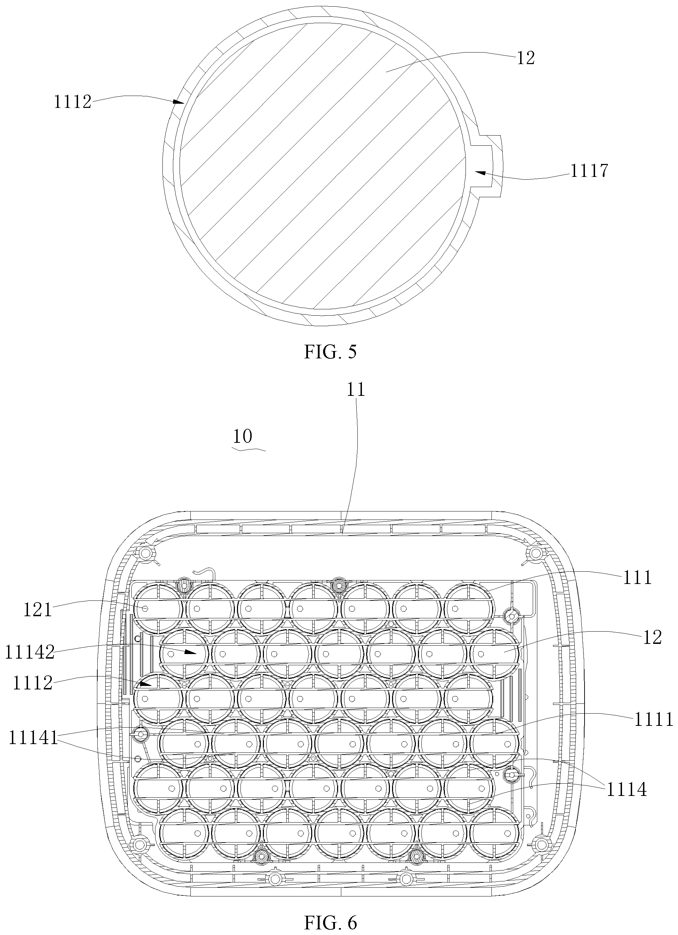

In some embodiments, as illustrated in FIG. 5, the first fixing recess 1112 has a special-shaped pressure relief groove 1117 in an extending direction of the first fixing recess. The pressure relief groove 1117 is located between the battery cell 12 and the side wall of the first fixing recess 1112 and may be in communication with the receiving chamber 112. The substances ejected from the battery cell 12 into the pressure relief space 1113 can flow into the receiving chamber 112 through the pressure relief groove 1117.

As illustrated in FIG. 6, in some embodiments, the fixing portion 1111 has a plurality of first fixing recesses 1112 arranged in parallel. The supporting structure 1114 includes two protruding ribs 11141 that pass through the plurality of first fixing recesses 1112 and form a guide channel 11142. The valve port of the first explosion-proof valve 121 is oriented towards the guide channel 11142 and is in communication with the receiving chamber 112 through the guide channel 11142.

In this way, by arranging the plurality of first fixing recesses 1112 in parallel at the fixing portion 1111, the plurality of battery cells 12 can be fixed, improving a space utilization rate. By forming the guide channel 11142 in the supporting structure 1114 and enabling the valve port of the first explosion-proof valve 121 to face towards the guide channel 11142, the substances ejected from the battery cell 12 can enter the receiving chamber 112 through the guide channel 11142 to achieve the purpose of the pressure relief.

In some embodiments, the fixing portion 1111 has the plurality of first fixing recesses 1112 arranged in parallel. For example, the plurality of first fixing recesses 1112 may be arranged in an array in the receiving chamber 112. The supporting structure 1114 includes two parallel protruding ribs 11141 that may pass through the plurality of first fixing recesses 1112, forming the guide channel 11142 in communication with the receiving chamber 112. In addition, the valve port of the first explosion-proof valve 121 of the battery cell 12 is oriented towards the guide channel 11142, in such a manner that the substances ejected from the battery cell 12 can flow into the receiving chamber 112 through the guide channel 11142.

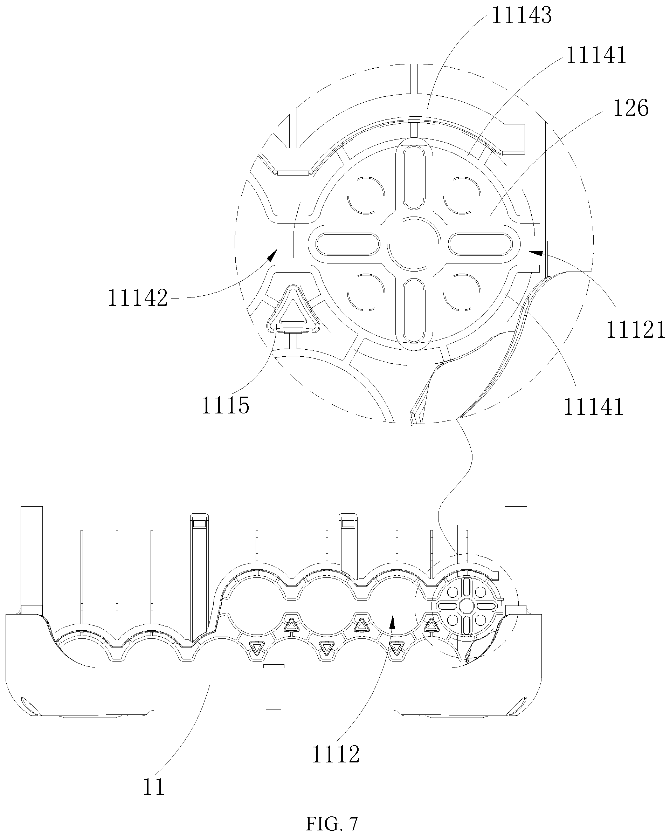

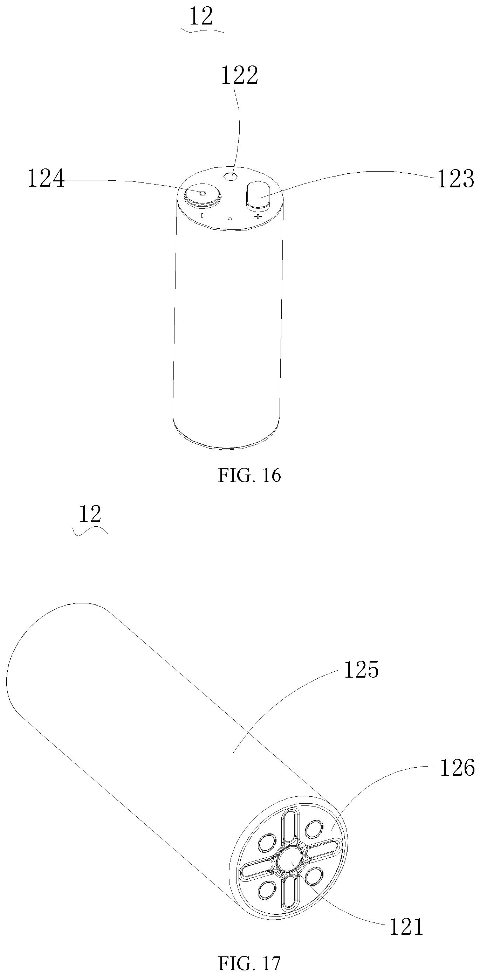

As illustrated in FIG. 7, FIG. 8, and FIG. 17, in some embodiments, the battery cell 12 is a cylindrical battery cell 12. The first fixing recess 1112 is a circular recess. Each of the two protruding ribs 11141 includes an arc segment 11144 and a straight segment 11145. Two adjacent arc segments 11144 are connected by the straight segment 11144. The arc segment 11144 is disposed along a circumferential edge of the first fixing recess 1112. The arc segment 11144 is at least partially in contact with a bottom wall 126 of the cylindrical battery cell. The arc segment is located closer to a wall of the first fixing recess 1112 than a center of the first fixing recess 1112.

In this way, by fixing the battery cell 12 with the first fixing recess 1112, a shape of the first fixing recess 1112 is adapted to a shape of the battery cell 12, which can stably fix the battery cell 12 and improve the space utilization rate. A part of the protruding rib 11141 in contact with the battery cell 12 is arranged along the circumferential edge of the first fixing recess 1112, in such a manner that the bottom wall 126 of the battery cell 12 is uniformly stressed. Therefore, large deformation of the bottom wall 126 is avoided to a certain extent, making overall safety of the battery cell 12 satisfactory.

In some embodiments, the battery cell 12 is the cylindrical battery cell, and the supporting structure 1114 includes the two protruding ribs 11141. Each of the two protruding ribs 11141 includes the arc segment 11144 and the straight segment 11145. The arc segment 11144 is disposed along the circumferential edge of the first fixing recess 1112. It should be understood that, within an allowable error range, a distance from any point at an inner side wall of the first fixing recess 1112 to a center of the first fixing recess 1112 is equal, and a circle formed by the arc segment 11144 of the protruding rib, a circle formed by the inner wall of the first fixing recess, and a circle surrounded by the side wall 125 of the cylindrical battery cell are concentric circles. In this way, when the battery cell 12 is accommodated in the first fixing recess 1112, the force exerted by the protruding rib 11141 on the bottom wall 126 of the battery cell 12 can be more uniform.

In an axial direction of the cylindrical battery cell, projection of the arc segment 11144 is at least partially located within projection of the first fixing recess 1112. In this way, after the battery cell 12 is accommodated in the first fixing recess 1112, the bottom wall 126 of the battery cell 12 is in contact with at least a part of the arc segment 11144. Therefore, the pressure relief space 1113 is formed between the arc segment 11144, the bottom wall 126 of the cylindrical battery cell, and the inner wall of the receiving chamber 112. In addition, a plurality of arc segments 11144 are connected by the straight segment 11145, which can guide the ejected substances of the battery cell 12.

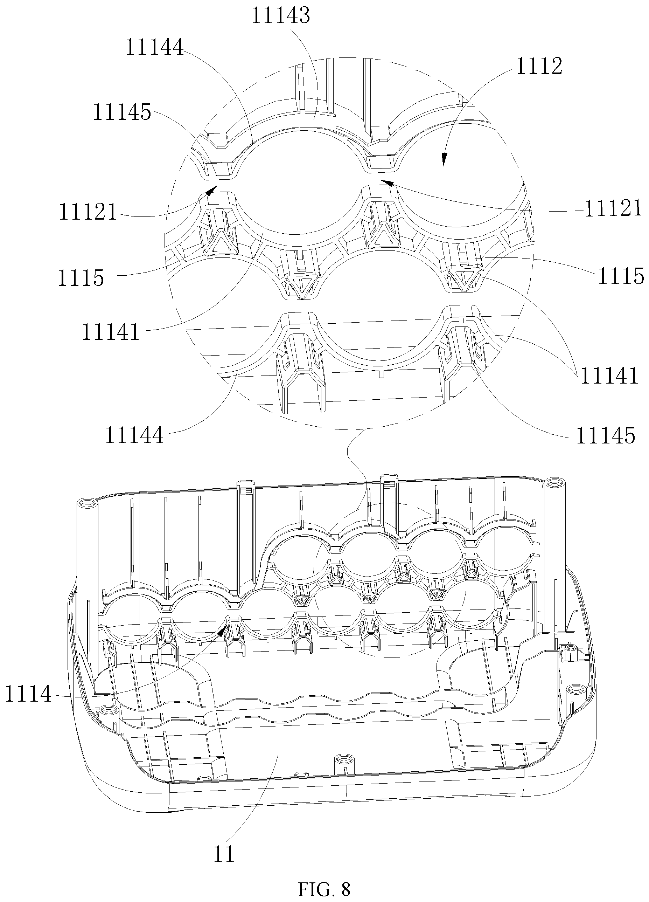

The battery cell 12 is accommodated in the first fixing recess 1112. The battery cell 12 is the cylindrical battery cell, and the side wall 125 of the cylindrical battery cell is fixed to an inner wall surface of the first fixing recess 1112, in such a manner that the first fixing recess 1112 has a function of guiding mounting and fixing of the cylindrical battery cell. As illustrated in FIG. 8, the fixing portion 1111 has the plurality of first fixing recesses 1112 arranged in rows. The rows of first fixing recesses 1112 are staggered with each other. In this way, the mounting space of the battery cell 12 can be saved, and the energy density of the energy storage power supply 100 can be improved.

The arc segment 11144 is located closer to a wall of the first fixing recess 1112 than a center of the first fixing recess 1112. In other words, when the arc segment 11144 is in contact with the bottom wall 126 of the battery cell 12, the arc segment 11144 is located closer to a circumferential edge of the bottom wall 126 than a center of the bottom wall 126.

On the one hand, the first explosion-proof valve 121 can be prevented from being blocked by the protruding ribs 11141, in such a manner that the substances ejected from the first explosion-proof valve 121 can smoothly flow into the pressure relief space 1113.

On the other hand, most of the force exerted by the protruding ribs 11141 on the bottom wall 126 of the battery cell 12 is transmitted to the side wall 125 of the battery cell 12, resulting in a smaller force acting on the bottom wall 126. When subjected to the force from the protruding ribs 11141 in the axial direction of the battery cell 12, a connection between the bottom wall 126 and the side wall 125 has a higher strength and can bear a greater force compared to the center of the bottom wall 126. Also, compared with the bottom wall 126, the side wall 125 of the battery cell 12 can bear a greater force in a direction of the force exerted by the protruding ribs 11141 (in the axial direction of the battery cell 12). Even if most of the force exerted by the protruding ribs 11141 on the bottom wall 126 is transmitted to the side wall 125 of the battery cell 12, the impact of this force on the side wall 125 of the battery cell 12 is relatively small. In this way, the bottom wall 126 of the battery cell 12 can be prevented from deforming under force to a certain extent, which results in problems such as short circuits caused by pressing against an internal winding core, improving the overall safety of the battery cell 12.

In an embodiment, a position where the protruding ribs 11141 are in contact with the bottom wall 126 of the battery cell 12 exceeds a position covered by a circle with the center of the bottom wall 126 as a center and half of a radius of the bottom wall 126 as a radius.

In other embodiments, the position where the protruding ribs 11141 are in contact with the bottom wall 126 of the battery cell 12 exceeds a position covered by a circle with the center of the bottom wall 126 as a center and two-thirds of the radius of the bottom wall 126 as a radius.

As illustrated in FIG. 7 and FIG. 8, the straight segments 11145 of the two protruding ribs 11141 form openings 11121 in an arrangement direction of the battery cells 12. A plurality of openings 11121 are sequentially connected to form the guide channel 11142 in communication with the receiving chamber 112. The valve port of the first explosion-proof valve 121 of the battery cell 12 is oriented towards the guide channel 11142, in such a manner that the substances ejected from the battery cell 12 can flow into the receiving chamber 112 through the guide channel 11142.

As illustrated in FIG. 3, in some embodiments, the first support 111 includes a plurality of fixing posts 1115 arranged at intervals. The plurality of fixing posts 1115 form the first fixing recess 1112 configured to be engaged with an end of the battery cell 12. The supporting structure 1114 is disposed at the fixing post 1115.

In this way, by providing the plurality of fixing posts 1115 to enclose the first fixing recess 1112, the end of the battery cell 12 can be fixed to the first fixing recess 1112, preventing the battery cell 12 from moving. Also, the supporting structure 1114 is disposed at the fixing post 1115, which allows for the formation of the pressure relief space 1113 while fixing the battery cell 12, guiding pressure relief of the battery cell 12.

In some embodiments as illustrated in FIG. 3, the first support 111 includes the plurality of fixing posts 1115 arranged at intervals. Each of the plurality of fixing posts 1115 is quadrangular prism, with each prism face being an arc surface, in such a manner that the first fixing recess 1112 can be enclosed by four adjacent fixing posts 1115 of the plurality of fixing posts 1115. When the end of the battery cell 12 extends into the first fixing recess 1112, the end of the battery cell 12 can be engaged with the first fixing recess 1112.

The supporting structure 1114 is disposed at the prism face of the fixing posts 1115, that is, at the inner wall of the first fixing recess 1112, which enables the supporting structure 1114 to support the end of the battery cell 12 and allows for the formation of the pressure relief space 1113.

As illustrated in FIG. 7 and FIG. 8, the first support 111 includes a fixing wall 11143 and the plurality of fixing posts 1115 arranged at intervals, the supporting structure 1114 is disposed at the plurality of fixing posts 1115, and a side of each of the plurality of fixing posts 1115 facing towards the battery cell 12 protrudes relative to the supporting structure 1114. Each of the plurality of fixing posts 1115 is a triangular prism in shape, with each prism face being an arc surface, in such a manner that the first fixing recess 1112 can be enclosed by adjacent fixing walls 11143 and the fixing posts 1115. When the end of the battery cell 12 extends into the first fixing recess 1112, the end of the battery cell 12 can be engaged with the first fixing recess 1112. The fixing wall 11143 is disposed around an outer contour of the first fixing recess 1112, which can strengthen the structural strength of the supporting structure 1114 and provide better fixing and protection for the battery cell 12.

As illustrated in FIG. 2, FIG. 9, and FIG. 10, in some embodiments, the housing assembly 10 includes a second support 14 connected to the housing 11. The battery cell 12 has an end connected to the first support 111 and another end connected to the second support 14.

In this way, by connecting the second support 14 to the housing 11, the other end of the battery cell 12 is connected to the second support 14, in such a manner that the battery cell 12 can be further fixed by the second support 14, enhancing the stability of the battery cell 12 in the housing assembly 10.

In some embodiments, the housing assembly 10 further includes the second support 14 that may be configured to fix the battery cell 12 and provide support for the inverter 20. The second support 14 may be connected to the housing 11 to enable fixing of the second support 14. For example, a first connection post 113 is formed at the inner wall of the housing 11 facing towards the second support 14, and a second connection post 143 is formed at an end surface of the second support 14 facing towards the housing 11. The first connection post 113 may be connected to the second connection post 143 by screw bolts, to fix the housing 11 with the second support 14.

The end of the battery cell 12 may be connected to the first support 111, and the other end of the battery cell 12 may be connected to the second support 14, in such a manner that the battery cell 12 can be fixed by the first support 111 and the second support 14.

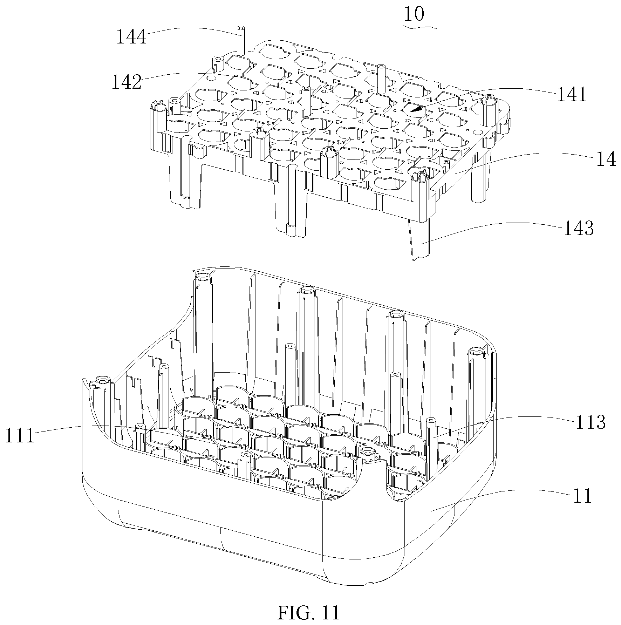

As illustrated in FIG. 2, FIG. 10, and FIG. 11, in some embodiments, the first support 111 has a first fixing recess 1112 configured to be engaged with the end of the battery cell 12, and the second support 14 has a second fixing recess 141 configured to be engaged with the other end of the battery cell 12. The battery cell 12 includes a second explosion-proof valve 122. The first explosion-proof valve 121 and the second explosion-proof valve 122 are disposed at two opposite sides of the battery cell 12, respectively. The second support 14 is arranged to avoid interference with the second explosion-proof valve 122.

In this way, by defining the second fixing recess 141 at the second support 14, the other end of the battery cell 12 can be fixed by the second fixing recess 141. By disposing the second explosion-proof valve 122 at the battery cell 12 and disposing the second explosion-proof valve 122 and the first explosion-proof valve 121 at two ends of the battery cell 12, respectively, the pressure relief of the battery cell 12 can be accelerated. Also, by arranging the second support 14 to avoid interference with the second explosion-proof valve 122, the second explosion-proof valve 122 can be prevented from being blocked.

In some embodiments, the second support 14 has the second fixing recess 141 with shape, size, and number adapted to those of the battery cell 12. For example, when the battery cell 12 is a cylinder in shape, the second fixing recess 141 is a circular recess. When the battery cell 12 is a quadrangular prism in shape, the second fixing recess 141 is a rectangular recess. When the number of the battery cells 12 is 28, the number of the second fixing recesses 141 is 28. Also, the position of the second fixing recess 141 is adapted to the position of the battery cell 12, in such a manner that the end of the battery cell 12 can be engaged with the second fixing recess 141. By engaging the other end of the battery cell 12 with the first fixing recess 1112, the battery cell 12 can be fixed in the housing assembly 10.

The second explosion-proof valve 122 is disposed at the end surface of the battery cell 12 close to the second support 14, and the second explosion-proof valve 122 and the first explosion-proof valve 121 are disposed at the two ends of the battery cell 12, respectively. The second explosion-proof valve 122 is internally provided with a weak position or a weak device. When pressure of the battery cell 12 rises, the weak position is ruptured by the pressure, releasing the pressure of the battery cell 12, to prevent the battery cell 12 from exploding or catching fire due to abnormal conditions such as overcharging, over-discharging, and short circuit.

The second support 14 may be arranged to avoid interference with the second explosion-proof valve 122. That is, when the battery cell 12 extends into and engages with the second fixing recess 141, the second explosion-proof valve 122 needs to be prevented from being blocked by the second support 14, in such a manner that the substances generated by the battery cell 12 can be ejected from the second explosion-proof valve 122, allowing the battery cell 12 to relieve pressure.

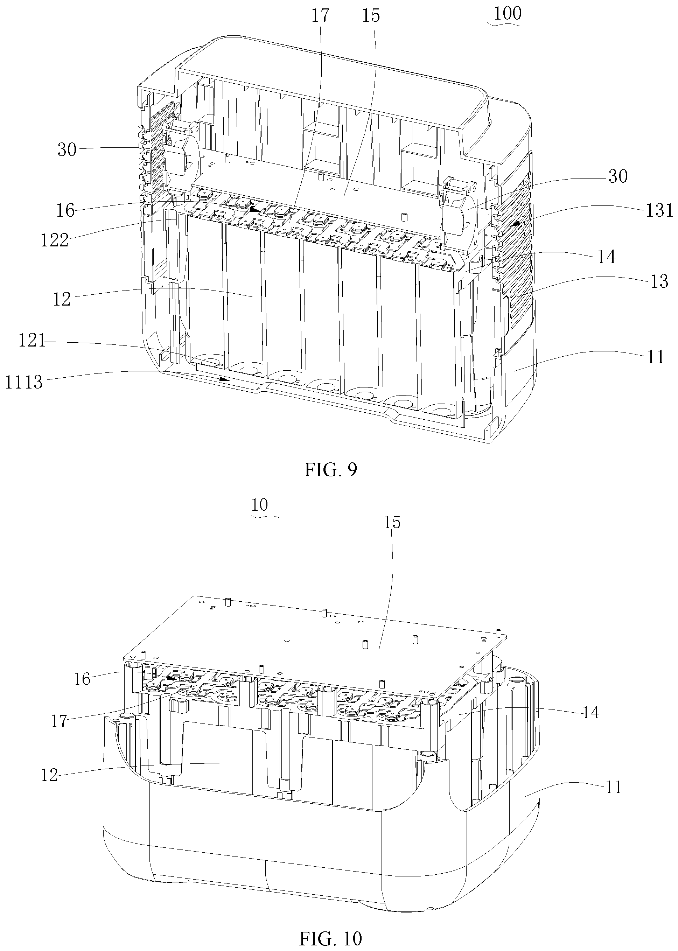

As illustrated in FIG. 2 and FIG. 10, in some embodiments, the housing assembly 10 includes a fixing base 15 connected to the second support 14 and spaced apart from the battery cell 12, and a heat dissipation space 16 is formed between the fixing base 15 and the second support 14.

In this way, by connecting the fixing base 15 to the second support 14 and spacing the fixing base 15 apart from the battery cell 12, the heat dissipation space 16 can be formed, which allows the substances ejected from the second explosion-proof valve 122 to enter the heat dissipation space 16.

In some embodiments, the housing assembly 10 further includes the fixing base 15 that may be configured to fix and support the inverter 20. The fixing base 15 may be connected to the second support 14 and is spaced apart from the battery cell 12, to form the heat dissipation space 16 between the fixing base 15 and the second support 14. For example, a fixing support post 144 is formed at the end surface of the second support 14 facing away from the first support, the fixing support post 144 protrudes from the end surface of the second support 14, and the fixing support post 144 may be connected to the fixing base 15 by screw bolts, in such a manner that the substances ejected from the second explosion-proof valve 122 can enter the heat dissipation space 16.

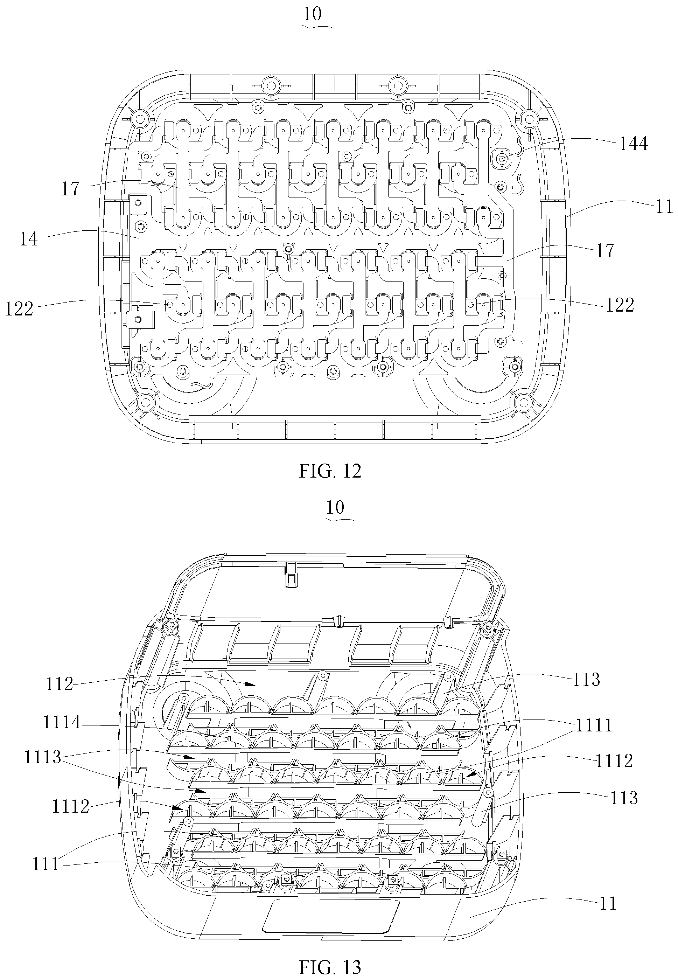

As illustrated in FIG. 2, FIG. 11, and FIG. 12, in some embodiments, the second fixing recess 141 has a through hole 142 at a bottom surface of the second fixing recess 141. The battery cell 12 includes a positive electrode 123 and a negative electrode 124. The positive electrode 123 and the negative electrode 124 of each of a plurality of battery cell 12 are connected by a bus bar 17 through the through hole 142. The bus bar 17 is arranged to avoid interference with the second explosion-proof valve 122.

In this way, by setting the bus bar 17 to connect the positive electrodes 123 and the negative electrodes 124 of the plurality of battery cells 12, the plurality of battery cells 12 can be connected in series. Also, by arranging the bus bar 17 to avoid interference with the second explosion-proof valve 122, the second explosion-proof valve 122 can be prevented from being blocked.

In some embodiments, the housing assembly 10 further includes the bus bar 17. The bus bar 17, which is a sheet-shaped connection piece made of a conductive material, is configured to connect the plurality of battery cells 12 to form an integral conductive structure. For example, the bus bar 17 may be made of conductive materials such as copper, aluminum, and copper-aluminum alloys, and aluminum-magnesium alloys. Therefore, the positive electrodes 123 and the negative electrodes 124 of the plurality of battery cells 12 can be connected by the bus bar 17, allowing the plurality of battery cells 12 to be connected in series or in parallel, to meet voltage and capacity requirements of different housing assemblies 10.

The second fixing recess 141 has the through hole 142 at the bottom surface of the second fixing recess 141, and the bus bar 17 may pass through the through hole 142, in such a manner that the positive electrodes 123 and the negative electrodes 124 of adjacent battery cells 12 of the plurality of battery cells 12 can be connected by the bus bar 17.

In some embodiments, the positive electrode 123 and the negative electrode 124 of the battery cell 12 may protrude from the through hole 142, enabling the bus bar 17 to be connected to the positive electrode 123 and the negative electrode 124 that protrude from the through hole 142.

The bus bar 17 may be arranged to avoid interference with the second explosion-proof valve 122. For example, after the battery cell 12 extends into and engages with the second fixing recess 141, the second explosion-proof valve 122 can eject the substances to the heat dissipation space 16 through the through hole 142. Therefore, when the positive electrodes 123 and the negative electrodes 124 are connected by the bus bar 17, the second explosion-proof valve 122 needs to be prevented from being shielded by the bus bar 17, to prevent the bus bar 17 from blocking the second explosion-proof valve 122.

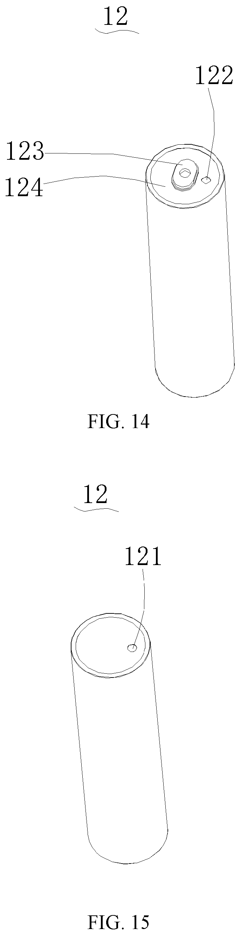

As illustrated in FIG. 9, FIG. 14, FIG. 15, and FIG. 16, in some embodiments, an included angle formed between a line connecting the first explosion-proof valve 121 and the second explosion-proof valve 122 and a perpendicular line passing through the second explosion-proof valve 122 is smaller than or equal to 10 degrees.

In this way, after a mounting position of the second explosion-proof valve 122 is determined, by making the included angle formed between the line connecting the first explosion-proof valve 121 and the second explosion-proof valve 122 and the perpendicular line passing through the second explosion-proof valve 122 smaller than or equal to 10 degrees, a mounting position of the first explosion-proof valve 121 can be determined, and the first explosion-proof valve 121 can be enabled to be located in the pressure relief space 1113, preventing the first explosion-proof valve 121 from being blocked.

In some embodiments, since it is unable to determine whether the position of the valve port is oriented towards the pressure relief space 1113 when the first explosion-proof valve 121 is inserted into the first fixing recess 1112, to prevent the first explosion-proof valve 121 from being blocked, a positional relationship between the first explosion-proof valve 121 and the second explosion-proof valve 121 needs to be determined when the first explosion-proof valve 121 and the second explosion-proof valve 122 are disposed at the battery cell 12. That is, the included angle formed between the line connecting the first explosion-proof valve 121 and the second explosion-proof valve 122 and the perpendicular line passing through the second explosion-proof valve 122 is smaller than or equal to 10 degrees. Therefore, when the battery cell 12 extends into and engages with the second fixing recess 141, by arranging the second explosion-proof valve 122 to avoid interference with the bus bar 17 and the second support 14, the position of the second explosion-proof valve 122 can be determined, further determining the position of the first explosion-proof valve 121.

As illustrated in FIG. 2 and FIG. 9, in some embodiments, the energy storage power supply 100 includes a fan 30 located in the receiving chamber 112. The fan 30 is configured to blow air to or exhaust air from the pressure relief space 1113. A direction of airflow formed by the fan 30 is the same as an extension direction of the guide channel 11142.

In this way, by disposing the fan 30 in the receiving chamber 112, the fan 30 can dissipate heat for the energy storage power supply 100.

In some embodiments, the energy storage power supply 100 further includes the fan 30. The fan 30 is disposed in the receiving chamber 112 and may blow air to or exhaust air from the receiving chamber 112. The fan 30 may be an air blower 30 or an exhaust fan 30. When the fan 30 is the air blower 30, the fan 30 may supply the air to the receiving chamber 112, in such a manner that the airflow can enter the pressure relief space 1113, enabling heat dissipation from the battery cell 12 through the pressure relief space 1113. When the fan 30 is the exhaust fan 30, the fan 30 can exhaust the air from the receiving chamber 112, in such a manner that a negative pressure is formed in the receiving chamber 112, and a positive pressure is formed in the external environment of the energy storage power supply 100. In this way, the airflow enters the pressure relief space 1113 under a pressure difference, enabling the heat dissipation from the battery cell 12 through the pressure relief space 1113.

In some embodiments, a plurality of fans 30 may be provided. For example, when two fans 30 are provided, one of the two fans can blow air to the receiving chamber 112, and the other fan 30 can exhaust air from the receiving chamber 112, and the direction of the airflow formed by the fan 30 is the same as the extension direction of the guide channel 11142. Therefore, the airflow can be driven to move in the receiving chamber 112, which allows the airflow to enter the pressure relief space 1113, enabling the heat dissipation from the battery cell 12 through the pressure relief space 1113.

In some embodiments, both of the two fans 30 are air blowers 30, and they blow air in the same direction in the receiving chamber 112, which makes the direction of the airflow formed by the fans 30 the same as the extension direction of the guide channel 11142, allowing the airflow to enter the pressure relief space 1113 and enabling the heat dissipation from the battery cell 12 through the pressure relief space 1113.

As illustrated in FIG. 1, FIG. 2, and FIG. 9, in some embodiments, the energy storage power supply 100 includes a ventilation structure 13 through which the receiving chamber 112 is in communication with an external environment.

In this way, by disposing the ventilation structure 13, the receiving chamber 112 can be in communication with the external environment, in such a manner that the substances ejected from the battery cell 12 can be discharged from the receiving chamber 112 to the external environment, to achieve the purpose of the pressure relief.

In some embodiments, the energy storage power supply 100 includes the ventilation structure 13 that may be a ventilation fin. The ventilation structure may be configured to guide or increase air circulation inside the energy storage power supply 100, dissipating heat from the energy storage power supply 100. The ventilation structure 13 is disposed at the first housing, or at the second housing, or at the first housing and the second housing simultaneously. A plurality of ventilation structures 13 may be provided. For example, when two ventilation structures 13 are provided, the two ventilation structures 13 can be disposed at two opposite sides of the energy storage power supply 100. When four ventilation structures 13 are provided, the four ventilation structures 13 can be disposed at a peripheral side of the energy storage power supply 100.

The ventilation structure 13 can form a ventilation hole 131. An inside of the housing assembly 10 may be in communication with the external environment of the housing assembly 10 through the ventilation hole 131, and the pressure relief space 1113 may be in communication with the ventilation hole 131, in such a manner that the substances ejected from the first explosion-proof valve 121 of the battery cell 12 can flow out of the housing assembly 10 through the ventilation hole 131 after flowing into the pressure relief space 1113.

In the description of this specification, descriptions with reference to the terms "an embodiment", "some embodiments", "illustrative embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A battery pack, comprising:
a battery cell; and
a housing assembly, wherein the housing assembly comprises:
a housing having a receiving chamber, the receiving chamber being provided with a first support at an inner wall of the receiving chamber, and the first support being configured for mounting the battery cell provided with a first explosion-proof valve, wherein the first support is provided with a supporting structure, wherein the supporting structure is configured to support the battery cell and allow a spacing to be formed between the first explosion-proof valve and the inner wall of the receiving chamber to form a pressure relief space, the pressure relief space being in communication with the receiving chamber, and a valve port of the first explosion-proof valve being oriented towards the pressure relief space.

2. The battery pack according to claim 1, wherein the first support and the housing are integrally formed.

3. The battery pack according to claim 1 or 2, wherein the first support comprises a fixing portion having a first fixing recess, the first fixing recess being configured to be engaged with an end of the battery cell, and the supporting structure being disposed in the first fixing recess.

4. The battery pack according to claim 3, wherein the first fixing recess has an opening at a side wall of the first fixing recess, the pressure relief space being in communication with the receiving chamber through the opening.

5. The battery pack according to claim 3, wherein a gap is formed between a side wall of the first fixing recess and a side wall of the battery cell, the pressure relief space being in communication with the receiving chamber through the gap.

6. The battery pack according to claim 3, wherein:
the fixing portion has a plurality of first fixing recesses arranged in parallel; and
the supporting structure comprises two protruding ribs that pass through the plurality of first fixing recesses and form a guide channel, the valve port of the first explosion-proof valve being oriented towards the guide channel and being in communication with the receiving chamber through the guide channel.

7. The battery pack according to claim 6, wherein:
the battery cell is a cylindrical battery cell;
each of the plurality first fixing recesses is a circular recess; and
each of the two protruding ribs comprises an arc segment and a straight segment, wherein two adjacent arc segments are connected by the straight segment, and wherein the arc segment is disposed along a circumferential edge of the first fixing recess, the arc segment being at least partially in contact with a bottom wall of the cylindrical battery cell, and the arc segment being located closer to a wall of the first fixing recess than a center of the first fixing recess.

8. The battery pack according to claim 1, wherein the first support comprises a plurality of fixing posts arranged at intervals, wherein the plurality of fixing posts form a first fixing recess configured to be engaged with an end of the battery cell, and wherein the supporting structure is disposed at the plurality of fixing posts.

9. The battery pack according to any one of claims 1 to 8, wherein the spacing between the first explosion-proof valve and the inner wall of the receiving chamber is greater than or equal to 2 mm.

10. The battery pack according to any one of claims 1 to 9, wherein the first explosion-proof valve is arranged to avoid interference with the supporting structure.

11. The battery pack according to any one of claims 1 to 10, wherein the supporting structure is a protrusion protruding from the inner wall of the receiving chamber.

12. The battery pack according to claim 1, wherein the housing assembly comprises a second support connected to the housing, the battery cell having an end connected to the first support and another end connected to the second support.

13. The battery pack according to claim 12, wherein:
the first support has a first fixing recess configured to be engaged with the end of the battery cell;
the second support has a second fixing recess configured to be engaged with the other end of the battery cell; and
the battery cell comprises a second explosion-proof valve, the first explosion-proof valve and the second explosion-proof valve being disposed at two opposite sides of the battery cell, respectively, and the second support being arranged to avoid interference with the second explosion-proof valve.

14. The battery pack according to claim 13, wherein:
the second fixing recess has a through hole at a bottom surface of the second fixing recess;
and
the battery cell comprises a positive electrode and a negative electrode, positive electrodes and negative electrodes of a plurality of battery cells being connected by a bus bar through the through hole, and the bus bar being arranged to avoid interference with the second explosion-proof valve.

15. An energy storage power supply, comprising:
an inverter; and
the battery pack according to any one of claims 1 to 14, wherein the battery cell and the inverter are mounted in the housing assembly, and wherein the inverter is electrically connected to the battery cell.
